(19) Europäisches Patentamt / European Patent Office / Office européen des brevets

(11) **EP 1 778 021 B1**

(12) **EUROPEAN PATENT SPECIFICATION**

(45) Date of publication and mention
of the grant of the patent:
**03.09.2008 Bulletin 2008/36**

(51) Int Cl.:
***A23G 9/00*** *(2006.01)*

(21) Application number: **05769979.5**

(22) Date of filing: **20.06.2005**

(86) International application number:
**PCT/EP2005/006698**

(87) International publication number:
**WO 2006/007922 (26.01.2006 Gazette 2006/04)**

(54) **ICE-CONTAINING PRODUCTS**

EIS ENTHALTENDE PRODUKTE

PRODUITS CONTENANT DE LA GLACE

(84) Designated Contracting States:
**AT BE BG CH CY CZ DE DK EE ES FI FR GB GR HU IE IS IT LI LT LU MC NL PL PT RO SE SI SK TR**

(30) Priority: **19.07.2004 EP 04254314**
**19.07.2004 EP 04254315**

(43) Date of publication of application:
**02.05.2007 Bulletin 2007/18**

(73) Proprietors:
• **Unilever PLC**
**London**
**Greater London EC4P 4BQ (GB)**
Designated Contracting States:
**CY GB IE**
• **Unilever N.V.**
**3013 AL Rotterdam (NL)**

(72) Inventors:
• **ALDRED, Alexander**
**Unilever R & D Colworth**
**Bedford Bedfordshire MK44 1LQ (GB)**
• **BINLEY, Gary Norman**
**Unilever Thai Holdings Ltd.**
**Bangkok, 10520 (TH)**
• **CHAMBERLAIN, Dorothy M.,**
**Unilever R & D Colworth**
**Bedford Bedfordshire MK44 1LQ (GB)**
• **LINDNER, Nigel Malcolm,**
**Unilever R & D Colworth**
**Bedford Bedfordshire MK44 1LQ (GB)**

(74) Representative: **Hugot, Alain et al**
**Unilever Patent Group**
**Colworth House**
**Sharnbrook**
**Bedford, MK44 1LQ (GB)**

(56) References cited:
| | |
|---|---|
| **EP-A- 0 352 829** | **EP-A- 1 051 913** |
| **FR-A- 2 641 675** | **US-A- 4 031 262** |
| **US-A- 4 310 559** | **US-A- 4 737 372** |
| **US-A- 4 738 862** | **US-A- 4 840 806** |
| **US-A- 5 698 247** | **US-A- 5 738 889** |

• **PATENT ABSTRACTS OF JAPAN vol. 0185, no. 37 (C-1260), 13 October 1994 (1994-10-13) -& JP 06 189686 A (TAIYO KAGAKU CO LTD), 12 July 1994 (1994-07-12)**
• **PATENT ABSTRACTS OF JAPAN vol. 1997, no. 09, 30 September 1997 (1997-09-30) -& JP 09 121778 A (MORINAGA & CO LTD), 13 May 1997 (1997-05-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The invention relates to unaerated ice-containing products with a particular bimodal frozen particle distribution that gives improved product flow/softness characteristics and a process for production of such products.

Background to the invention

A desirable quality in the handling of frozen products is for softer products that can be more easily handled and served directly from the freezer (e.g. improved scoopability). In the case of frozen products that are eaten in a frozen state, e.g. frozen confectionery products, there is also a desire for softer products that are easier to eat and which also improve the sensory delivery through softer texture and improved flavour delivery. Recent approaches to improving product softness in aerated frozen confectionery products such as ice cream include manipulation of the level and molecular weight of the added sugars. Manipulations of these sugars can however not only change the sweetness of the end product but also in these health conscious times increase the calorific value of the product. It is therefore desirable to be able to improve the softness of frozen products with similar, or if possible reduced, sugar content. The problem of product hardness is even more pronounced in unaerated frozen products and accordingly, there is a need for unaerated frozen products that have improved softness and scoopability.

EP-A-1 051 913 discloses a cold confectionery having fine ice fragments, wherein a length in a longitudinal axis direction of said ice fragments is not more than 1.0 mm and an average value thereof is in the range of 0.06 mm to 1.0 mm, and at least 80% of the ice fragments is in the range of 0.06 mm to 1.0 mm.

US-A-5 738 889 discloses a deformable ice confection giving a smooth mouth feel and refreshment from a high ice content which comprises smooth convex faced ice particles in a deformable medium, eg a syrup or ice cream.

US-A-4 031 262 discloses an ice cream scattered with ice granules to provide more cooling and refreshing aftertaste.

US-A-5 698 247 discloses a process for the manufacture of a frozen spoonable water-ice comprising the steps of: (i) producing of ice flakes at a temperature of-10° C. or below, preferably-20° C. or below; (ii) grinding the ice flakes produced in step (i) into approximately spherical ice granules at a temperature of-10° C. or below, preferably-20° C. or below; (iii) mixing the ice granules produced in step (ii) with a flavoured ice slurry; and (iv) packaging the mixture obtained in step (iii) and freezing for storage.

Summary of the invention

We have developed a process for producing unaerated ice confections, sauces and other ice-containing products that are softer than the equivalent products having the same ingredients and ice content and made by conventional processes. The process of the invention involves manipulating the ice phase by adding some of the ice present in the final product as large particles in the mm size range (as compared with the typical ice crystal size of less than 0.1 mm). We have found that not only is it important that the larger ice crystals are above a certain size, but also that the ratio of the weight of the population of large ice crystals to the weight of the population of small ice crystals is important in providing an optimum product.

The resulting bimodal ice distribution where the sizes of the frozen particles in the two populations are within certain size ranges and the two populations of frozen particles are present in certain proportions leads to products which are softer, for example having improved spoonability and/or scoopability when taken straight from the freezer, i.e. at about -18°C. It is also possible to produce frozen products, such as ice confections, that are squeezable when taken straight from the freezer.

Accordingly, in a first aspect, the present invention provides an unaerated ice-containing product comprising at -18°C a first population of frozen particles having a particle size of greater than 1 mm and less than 5 mm, and a second population of frozen particles having a mean particle size such that the ratio of the mean particle size for the first population to the mean particle size for the second population is greater than 9, preferably 10, wherein the ratio of the weight of the first population of particles to the weight of the second population is from 2:3 to 4:1, preferably 2:3 to 3:1, and the first population and second population together provide at least 90%, preferably at least 95%, of the frozen particles present in the ice-containing product.

Preferably the ice-containing product is an ice confection or a sauce.

In a preferred embodiment, the first population of frozen particles and the second population of frozen particles are ice particles.

In another embodiment, the first population of frozen particles are frozen food particles.

In a second aspect, the present invention provides a method of producing an unaerated ice-containing product according to the first aspect of the invention which method comprises in the following order:

(i) cooling a frozen product concentrate to a temperature of below -4°C, preferably below -6°C or -8°C;
(ii) combining the cooled concentrate with frozen particles, at least 90% of which have a particle size of greater than 5 mm;
(iii) mechanically reducing the size of the frozen particles such that at least 90% of the resulting frozen particles have a size of greater than 1 mm and less than 5 mm; and optionally
(iv) lowering the temperature of the product obtained in step (iii) to a temperature of -18°C or lower.

Preferably the ice-containing product is an ice confection or sauce.
Preferably the concentrate is a frozen confectionery premix concentrate or a sauce concentrate.
In one embodiment, the method further comprises a step (v) of adding an aqueous liquid to the product obtained in step (iii) or step (iv).

Detailed description of the invention

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in Ice Cream, 4th Edition, Arbuckle (1986), Van Nostrand Reinhold Company, New York, NY.

Tests and Definitions

**Overrun**

Overrun is defined by the following equation.

$$OR = \frac{\text{volume of frozen aerated product} - \text{volume of premix at ambient temp}}{\text{volume of premix at ambient temp}} \times 100$$

It is measured at atmospheric pressure.
Ice-containing products of the invention are unaerated. An unaerated ice-containing product of the invention preferably has an overrun of less than 10%, preferably less than 8% or 7%. The term "unaerated" means that frozen product has not been subjected to deliberate steps such as whipping to increase the gas content. Nonetheless, it will be appreciated that during the preparation of unaerated products, low levels of gas, such as air, may be incorporated in the product.

**Total Ice Content**

Total ice content is measured by adiabatic calorimetry as described by de Cindio and Correra in the Journal of Food Engineering (1995) 24 pp.405-415. Calorimetric techniques, particularly adiabatic calorimetry, have proved to be the most suitable, since they can be used on complex food systems, and do not require any other information about the food, such as composition data, unlike some of the other techniques. The larger measured sample size (80g) allows measurement of heterogeneous samples such as those claimed with varied ice particle sizes.

**Size, Area Size and Volume**

Frozen particles are 3-dimensional objects, often of an irregular shape. However, methods for viewing and measuring such particles are often 2-dimensional (see below). Consequently, measurements are often made solely in one or two dimensions and converted to the required measurements.
By "area size", we mean the maximum area as seen in the image plane (i.e. when viewed using optical imaging). Typically at least 500 particles should be measured.
The size and volume of a particle can be calculated from an area size measurement by assuming a regular shape for the particle and calculating the size or volume on that basis. Typically, the assumed regular shape is a sphere and therefore the size is 2 X the square root of (the area size/pi). This is described in detail below.
Measurements are made at -10°C or -18°C. However, size, area and volume measurements made at -10°C, whilst easier to perform, will need to be converted to an equivalent at -18°C as described below. Measurements are made at standard pressure.

**Ice Particle Size Distribution**

The ice particle size distribution of a frozen product can be measured as follows.

*Sample Preparation*

All equipment, reagents and products used in sample preparation are equilibrated to the measurement temperature (-10°C) for at least 10 hours prior to use.

A 10 gm sample of the frozen product is taken and added to 50 $cm^3$ of dispersing solution (20% ethanol in aqueous solution) and gently agitated for 30s or until the sample has completely dispersed into single particles. The whole ice / ethanol / water mix is then gently poured into a 14 cm diameter petri dish - ensuring complete transfer and again gently agitated to ensure even dispersal of the ice particles in the dish. After 2 s (to allow for cessation of particle movement) an image is captured of the full dish.

Ten replicate samples are taken for each product.

The aqueous ethanol dispersing solution can be designed to match the measurement conditions of the experimental system - see 'Concentration properties of Aqueous solutions: conversion tables' in "Handbook of Chemistry and Physics", CRC Press, Boca Raton, Florida, USA.

*Imaging*

Images can be acquired using a domestic digital camera (e.g. JVC KY55B) with its macro-lens assembly as supplied. The camera is selected to provide sufficient magnification to reliably image particles with an area size from 0.5 $mm^2$ to greater than 50 $mm^2$. For imaging, the petri dish containing the sample was placed on a black background and illuminated at low angle (Schott KL2500 LCD) to enable the ice to be easily visualised as bright objects.

*Analysis*

Image analysis was conducted using the Carl Zeiss Vision KS400 Image analysis software (Imaging Associates Ltd, 6 Avonbury Business Park, Howes Lane, Bicester, OX26 2UA) with a macro programme specifically developed to determine the area size of each particle in the image. User intervention is required to remove from the image: the edge of the petri dish, air bubbles, coincidentally connected ice particles and any residual undispersed material. Of these features, only the apparent connection between ice particles is relatively frequent.

The 10 samples taken allow for the sizing of at least 500, and typically several thousand, particles for each product characterised. From this image analysis it is possible to calculate two defining characteristics of the larger ice particles (above 0.5$mm^2$) that are structuring these systems:

(i) the range and mean of the diameters of the larger included particulate ice.
(ii) the volume and hence weight that the larger included particulate ice made to the original 10gm sample.

The estimate of volume of the larger ice particle size is made by converting the two-dimensional area analysis into a calculated volume, $\Phi_L$. This is done according to the measured diameter of each ice particle. Hence:

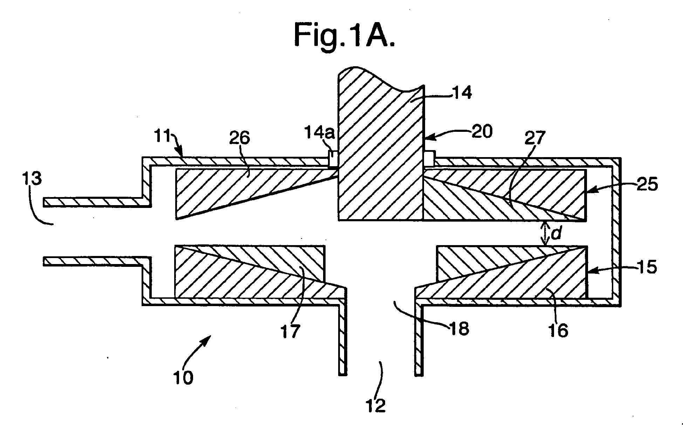

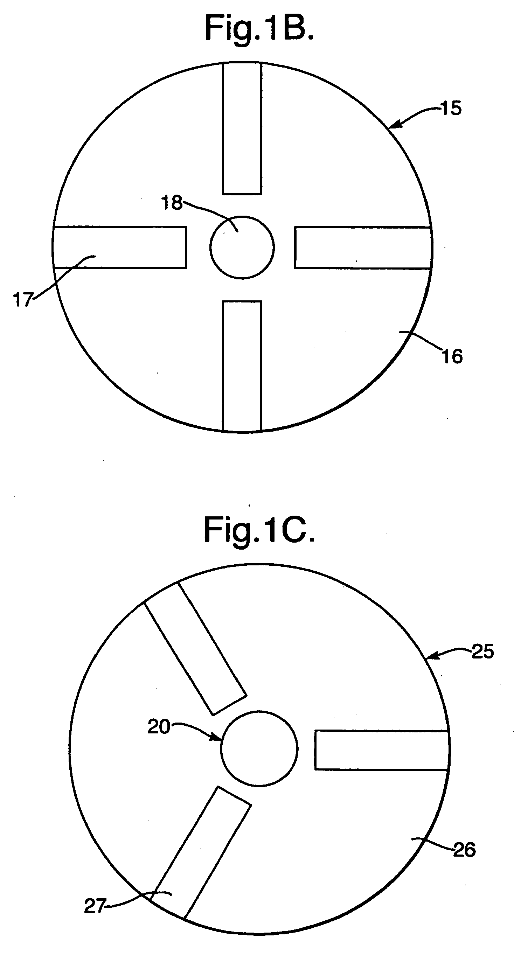

1. For spherical particles (such as particles smaller than the gap size 'd' of the cutting blades of the crushing pump of Figure 1) where the particles are assumed to be spherical) the measured area is converted to an equivalent circle area with associated, diameter and radius. This equivalent radius is then used to calculate the equivalent volume sphere ($mm^3$). The diameter represents the particle "size" in terms of length.

2. For non-spherical particles, the calculations will depend on the shape. For example those larger than the gap size 'd' of the cutting blades of the crushing pump of Figure 1, the particles are assumed to be planar disks with area as measured and a thickness given by the cutting blades 'd' to yield the particle volume ($mm^3$).

Additionally, the temperature at which measurements are made (-10°C) could be different from the production or storage temperature of the product. In this case it is necessary to estimate the 'difference' in the amount of ice from the original system. This estimate can be made using the methodology described in WO98/41109 or by direct calorimetric measurement as described in de Cindio and Correra (ibid). The 'difference' amount is then attributed back to each measured ice particle on a basis linearly proportionate to its measured volume to provide the final estimate of the volume of ice and the volume size distribution of the ice in the original sample.

The estimated volume of the larger ice measured by this image analysis procedure therefore also yields the weight of larger ice $\Phi_L$ in initial products by multiplying the estimated volume by the known density of ice.

**Proportion of larger added ice and smaller ice**

The amount by weight of total ice $\Phi_T$ can be measured using adiabatic calorimetry (described above).

From this the proportion by weight of the smaller ice, $\Phi_S$ can be calculated by deducting the weight of larger added ice ($\Phi_L$), calculated in the preceding section, from the total ice content where,

$$\phi_S = \phi_T - \phi_L$$

The ratio of larger to smaller ice is then $\phi_L / \phi_S$

**Scanning Electron Microscopy**

The microstructure of samples was visualised by Low Temperature Scanning Electron Microscopy (LTSEM).

The samples were cooled to -80°C on dry ice prior to SEM sample preparation. A sample section was cut (6mm x 6mm x 10mm) and mounted on a modified sample holder using a compound: OCT ™ at the point of freezing. OCT is an aqueous embedding medium used primarily for cryotome preparation of material for light microscopy. It is also called 'tissue tek' and is supplied by Agar Scientific. The advantage of using OCT rather than water to mount the samples for electron microscopy is that when OCT changes from liquid to solid i.e. freezes it changes to opaque from transparent allowing visual identification of the freezing point. Identification of this point allows the sample to be mounted using a liquid at its coldest just prior to solidifying which will give strong support during rapid cooling. The sample including the holder was plunged into liquid nitrogen slush and transferred to a low temperature preparation chamber: Oxford Inst. CT1500HF (Oxford Instruments, Old station way, Eynsham Whitney, Oxon, OX29 4TL, UK). The chamber is under vacuum, approximately $10^{-4} - 10^{-5}$ mbar, and the sample is warmed to -90°C. Ice is slowly etched to reveal surface details not caused by the ice itself, so water is removed at this temperature under constant vacuum for 2-3 minutes. Once etched, the sample is cooled to -110°C to prevent further sublimation, and coated with gold using argon plasma. This process also takes place under vacuum with an applied pressure of $10^{-1}$ millibars and current of 5 milliamps for 30 sec. The sample is then transferred to a conventional Scanning Electron Microscope (JSM 5600 - Jeol UK Ltd, Jeol House, Silvercourt Watchmead, Welwyn Garden City, Herts, AL7 1LT, UK)), fitted with an Oxford Instruments cold stage at a temperature of -150°C. The sample is examined and areas of interest captured via digital image acquisition software.

From these digital images it is possible to visualise the smaller ice particles (less than 0.5 mm$^2$) and the mean particle size diameters can be calculated.

**Particle size ratio**

The ratio of mean particle sizes of the smaller and larger ice distributions can be calculated from the LT SEM and optical microscopy analysis, respectively. This ratio is expressed as

$$\sigma_L / \sigma_S = \text{Mean Larger Particle Distribution} / \text{Mean Smaller Particle Distribution}$$

**Total Solids**

The dry weight of the system as measured by the oven drying method as described in Ice Cream 6th Edition, Marshall et al. (2003), p296.

**Hardness Test (Vickers)**

The Vickers hardness test is an indentation test that involves pushing a pyramid shaped indentor into the surface of a material and recording the force applied as a function of tip displacement. Force and displacement are measured during the indentation loading cycle and the unloading cycle.

The Vickers pyramid geometry is an engineering industry standard (Bsi 427,1990). It has an apex angle at the tip of 136°. Hardness is determined as $H_v = F_{max} / A$ where Hv is the Vickers Hardness, $F_{max}$ is the maximum applied force (see Fig.) and A is the projected area of the indentation left in the material surface. The area A is determined by assuming the indentation has the same geometry as the indentor that formed it and therefore the projected area can be determined from the indent depth given by $d_l$ (Fig) then $A = 24.5 \, d_l^2$. The Vickers Hardness of a material is a measure of the material's resistance to plastic deformation.

The test samples were collected in small pots and after hardening (-25°C) equilibrated at the test temperature (-10°C or -18°C) overnight beforehand. Measurements were conducted on a universal testing machine made by Instron (Code 4500) within a temperature controlled cabinet at -18°C. The crosshead speed was 2mm/min. The maximum load was 95 N. The pyramid tip was pushed into the surface of the material to a depth of 1.5 mm for a water ice or sorbet and 2.5 mm for an ice cream.

Except in the examples, including any comparative examples, or where otherwise explicitly indicated, all numbers in the description and claims should be understood as modified by the word "about".

Ice-containing products

Ice-containing products of the invention, such as ice confections and sauces, are characterised by a particular bimodal distribution of frozen particles, such as ice particles, which give a softer, more flowable rheology than the equivalent product made with a unimodal ice distribution. The bimodal distribution is made up of two distinct populations of frozen particles. The first population has a relatively large particle size and the second population has a small particle size, of the order that would be obtained using standard methods for freezing ice confections in a slush freezer, i.e. less than 100 μm.

Preferably the products have a Vickers Hardness of less than 4 MPa at-18°C, more preferably less than 3 or 2 MPa at -18°C.

Importantly, the weight of the first population of frozen particles is equal to or greater than 40% of the total weight of frozen particles, preferably greater than 50%, 60% or 65%. The weight of the first population of frozen particles should also be equal to or less than 90% of the total weight of frozen particles. In one embodiment it is preferred that the weight of the first population of frozen particles is equal to or less than 85% or 80%, such as less than or equal to 75% of the total weight of frozen particles.

It is also important that the weight of the second population of frozen particles is equal to or less than 60% of the total weight of frozen particles, preferably less than 40% or 35%. The weight of the second population of frozen particles should also be equal to or greater than 10% of the total weight of frozen particles. In one embodiment it is preferred that the weight of the second population of frozen particles is equal to or greater than 15% or 20%, such as greater than or equal to 25% of the total weight of frozen particles.

Expressed as ratios, the ratio of the weight of the first population to the second population of frozen particles is from 2:3 to 9:1 such as from 2:3 to 4:1, 1:1 to 9:1, 1:1 to 4:1, 1:1 to 3:1, 2:1 to 9:1, 2:1 to 4:1 or 2:1 to 3:1.

The frozen particles in the first population have a particle size of greater than 0.5 mm, more preferably greater than 0.75, 0.9, 1 or 1.5 mm. The frozen particles in the first population preferably have a particle size of equal to or less than 5 mm, such as less than 4 mm or 3.5 mm.

The frozen particles in the second population typically have a particle size such that the ratio of the mean particle size in the first population to the ratio of the mean particle size in the second population is greater than 9, more preferably greater than 10. In one embodiment, the ratio is greater than 20. Typically, the ratio is less than 100, such as less than 50.

In a preferred embodiment, the frozen particles in the second population have a particle size of less than 100 μm, preferably less than 90 or 80 μm.

It will be appreciated that in a bimodal product, some frozen particles will have sizes that fall between the two populations. However, these particles should make up 10% or less of the total weight of frozen particles in the ice-containing product, more preferably less than 5%.

The frozen particles are typically ice or a frozen edible material, such as fruit pieces, fruit juice, vegetable pieces, chocolate or couvertures, dairy products such as milk and yoghurt, sauces, spreads and food emulsions, confectionery pieces (e.g. candy, marshmallow, fudge) or caramel.

The frozen particles in the second population will typically be ice, formed during the freezing process. However the frozen particles in the first population can be ice or a frozen edible material or a combination thereof.

In one embodiment, the ice-containing products of the invention are ice confections and include confections that typically contain milk or milk solids, such as ice cream, milk ice, frozen yoghurt, sherbet and frozen custard, as well as frozen confections that do not contain milk or milk solids, such as water ice, sorbet, granitas and frozen purees. Ice confections of the invention also include frozen drinks, such as milkshakes and smoothies, particularly frozen drinks that can be consumed at -10°C.

Ice-containing products of the invention may be in the form of concentrates, i.e. having a lower ice/water content (and therefore a higher solids content by wt%) than an equivalent normal strength product. Such concentrates can, for example, be diluted with an aqueous liquid, such as milk or water, to provide a refreshing drink.

Process for manufacturing ice-containing products

The process of the invention involves generating some of the ice by normal freezing of one portion of the product, which contains a lower percentage of water/ice than the final product, and generating the remainder of the ice separately as relatively large particles in the mm range. The large particles of ice are then added to the frozen concentrate, mixed, and the size of the large ice particles mechanically reduced to the desired size of 0.5 mm or above. The advantage of this process is that it is possible to reduce the weight of smaller ice produced because fewer ice crystals form in the frozen concentrate than would be the case with the normal strength formulation. This then allows a substantial amount of larger ice made separately to be added and the mixture processed to generate the desired bimodal population with the desired ratio of small ice to large ice.

Concentrates typically have total solids contents of at least 35% by weight, preferably at least 40% or 45% by weight. The total solids content is typically at most 65%, preferably at most 60%, since it is difficult to process very high solids content concentrates. In contrast, end products typically have a total solids content of 30% or less.

The concentrate is cooled to a temperature of below -4°C, preferably below -6°C, -8°C or -10°C. Typically, this is achieved by freezing the concentrate in an ice cream freezer or similar (e.g. scraped surface heat exchanger).

The large frozen particles, a substantial proportion of which have a size of equal to or greater than 5 mm can, for example, be generated in a fragmented ice maker such as that described in US Patent No. 4,569,209. It will be appreciated that when making the large frozen particles for inclusion in the mix, a small proportion may have particles of a size of less than 5 mm. According the phrase "a substantial proportion" means that at least 90%, more preferably at least 95%, of the particles have a size of equal to or greater than 5 mm.

The large frozen particles are then mixed in with the cooled/frozen concentrate. This can for example be achieved by feeding the large frozen particles through a fruit feeder into the cooled/frozen concentrate exiting the ice cream freezer.

The amount of frozen particles (wt% of the final product) that is added is preferably at least 22 wt%, more preferably at least 25, 30 or 35 wt%. Typically the amount of frozen particles added is less than 80, 70 or 60 wt%.

The particle size reduction step involves mechanically reducing the size of the added large frozen particles to the desired size. In a preferred embodiment, this can performed by passing the mix through a constriction of a size, d, less than 5 mm, preferably of from greater than 0.5 to 4 mm, more preferably greater than 0.75, 0.9 or 1 mm and less than 3.5 mm. This allows for in-line reduction of particle size and may comprise, for example, passing the mix through a pump comprising an outlet of size d, and/or passing the slush between parallel plates separated by a distance d and wherein one of the plates rotates relative to the other. An example of a suitable device is shown in Figure 1 and described in the Examples.

The mechanical size reduction step should be adjusted such that a substantial proportion (i.e. at least 90%, more preferably at least 95%) of the resulting particles will have a size of greater than 0.5 mm and less than 5 mm, preferably greater than 0.75, 0.9 or 1 mm and less than 4 or 3.5 mm.

The resulting product will then typically be subject to further treatment to lower its temperature to typical storage temperatures, such as -18°C or less, e.g. -25°C. The product may also, optionally, be subject to a hardening step, such as blast freezing (e.g. -35°C), prior to storage. Before serving, the product is generally tempered back to at least -18°C. In one embodiment, the product is warmed up to -10°C and served as a drink.

The present invention will now be further described with reference to the following examples, which are illustrative only and non-limiting. The examples refer to Figures:

Figure 1 - is a drawing of an example of a size reduction device for use in the method of the invention.

Figure 2 - is a chart showing the effect of ice size/addition on product hardness in a model system.

Figure 3 - is an electron micrograph of a product of the invention. Size bar = 1mm.

EXAMPLES

**Process for manufacture**

*Preparation of Concentrate*

All ingredients except for the flavour and acids were combined in an agitated heated mix tank and subjected to high shear mixing at a temperature of 65°C for 2 minutes. The resulting mix was then passed through an homogeniser at 150 bar and 70°C followed by pasteurisation at 83°C for 20 s and rapid cooling to 4°C using a plate heat exchanger. The flavour and acids were then added to the mix and the resulting syrup held at 4°C in an agitated tank for a period of around 4 hours prior to freezing.

*Preparation of Ice Particles*

A Ziegra Ice machine UBE 1500 (ZIEGRA-Eismaschinen GmbH, Isernhagen, Germany) was used to manufacture ice particles measuring approximately 5 x 5 x 5-7 mm.

*Freezing of Concentrate*

The concentrate was frozen using a typical ice cream freezer Crepaco W04 (scraped surface heat exchanger) operating with an open dasher (series 80), a mix flow rate of 120 l / hour, an extrusion temperature of -10 to -14°C and an overrun at the freezer outlet of 0 to 100%. Immediately upon exit from the freezer, the ice particles were fed into the stream of frozen concentrate using a fruit feeder Hoyer FF4000 (vane type) to form a slush. The flow rates of the concentrate from the freezer and the flow rate of ice addition were controlled to give the desired ice inclusion level.

The resulting slush was then passed through a size-reduction device. The size-reduction device (10) is schematically illustrated in Figures 1a to 1c and comprises the drive (20) and casing (11) of a centrifugal pump (APV Puma pump)

The generally cylindrical casing (11) has a tubular outlet (13) disposed at its edge and has a tubular inlet (12) located centrally in its base. Opposite the inlet (12) and located in the centre of the top of the casing (11) is an aperture (14) for receiving the drive shaft (20) of the centrifugal pump. The drive shaft (20) is in sealing engagement with the casing (11) owing to the presence of an annular seal (14a) located there between.

Located within the casing (11) is a pair of parallel plates (15, 25), being coaxially aligned with the casing (11) and spaced longitudinally from each other by a distance, d. The lower plate (15) is fixedly attached to the base of the casing (11) whilst the upper plate (25) is fixedly attached to the drive shaft (20). By means of its attachment to the drive shaft (20) the upper plate (25) is rotatable relative to the casing (11). In contrast, the lower plate (15) is stationary owing to its attachment to the casing (11).

The lower plate (15) comprises a disc (16) having an central aperture (18) therethrough which is in fluid communication with the inlet (12) of the casing (11). The whole of the bottom surface of the disc (16) is flat and in contact with the base of the casing (11). The top surface of the disc (16) tapers radially inwards towards the central aperture (18). Projecting upwards from the top surface of the disc (16) are a plurality, for example four, fins (17) spaced regularly around the circumference of the plate (15). Each fin (17) has an upper surface that extends radially inward from, and remains at a height level with, the outer edge of the top surface of the disc (16).

The upper plate (25) is similar to the lower plate (15) but inverted such that it is the top surface of the disc (26) that is flat and the bottom surface tapered. The central aperture of the disc (26) of the upper plate receives the drive shaft (20) and the top surface of the disc (26) is slightly spaced longitudinally from the top of the casing (11) to allow the plate (25) to rotate freely. The top plate (25) may be provided with a different arrangement of fins to the lower plate (15) and in this case the upper plate (25) has three fins (27) whilst the lower (15) has four fins (17).

The size-reduction device (10) is arranged such that slush pumped in through the inlet (12) is required to pass between the parallel plates (15, 25) before it can exit through the outlet (13). The narrow spacing (d) of the plates along with the grinding action of the fins (27) on the rotating top plate (25) against the fins (17) of the bottom plate (15) ensures that the ice particles passing through the device have a maximum length of less than d in at least one dimension. This constriction size, d, can be varied from 0.1 to 5mm depending on product requirements.

**Example 1 - Squeezeable Iced Drink Concentrates**

The process of the invention was used to make a drinks product concentrate which is squeezeable. The concentrate can be squeezed from the container straight after being taken out of a freezer at -18°C and added to milk or water to give an iced drink. A lower amount of water is included in the formulation to create a concentrated mix. The remaining water (50%) is then added as ice from a Ziegra machine. A control sample was made where the formulation contains the usual amount of water: no ice was added during processing.

| Ingredient | Concentrate Mix | Cherry Slush Product | Control |
|---|---|---|---|
| Water (%) | 47.12 | 23.56 | 73.56 |
| Sucrose (%) | 9.6 | 4.8 | 4.8 |
| Dextrose monohydate (%) | 14.4 | 7.2 | 7.2 |
| Low fructose com syrup (78% solids) | 27.6 | 13.8 | 13.8 |
| Guar gum (%) | 0.4 | 0.2 | 0.2 |
| Cherry flavour (%) | 0.06 | 0.03 | 0.03 |
| Red colour (%) | 0.02 | 0.01 | 0.01 |
| Citric acid (%) | 0.8 | 0.4 | 0.4 |
| Total solids (%) | 45.5 | 22.75 | 22.75 |
| Overrun % | 0 | 0 | 0 |
| Added Ice % | 0 | 50 | 0 |
| Total ice at -18°C | ----- | 64 | 64 |
| Proportion of added ice % | ----- | 78 | 0 |
| Gap size of Crushing Pump (mm) | ----- | 1.0 | ----- |
| Ratio of large to small particles | ----- | 10 | ----- |

Example 1: The ice cream freezer was run with the following settings: Mix flow of 65l/hour, overrun of 7%, barrel pressure of 2.5 bar, motor load of 110%, and an extrusion temperature of-13.1°C.

The size reduction device was run at a speed of 520rpm with a 1.5mm gap size setting. The in-line pressure was 1 Bar. The ice particles produced using the Ziegra machine were added at a rate of 1400g/min.

Comparative Example 1: The freezer was run with the following settings: Mix flow of 100l/hour, overrun of 7%, barrel pressure of 2.5 bar, motor load of 100%, and an extrusion temperature of -6.2°C.9

The size reduction device was run at a speed of 520rpm with a 1.5mm gap size setting. The in-line pressure was 2-3 Bar.

Both samples were collected and hardened in a blast freezer before being stored at -25°C. Samples were analysed by using the Vickers Hardness test. The Vickers Hardness test is an indentation test that involves pushing a pyramid shaped indentor into the surface of material and recording the force applied as a function of tip displacement. Force and displacement are measured during the indentation loading cycle and the unloading cycle. For water ices, the pyramid tip pushes into the surface of the material to a depth of 1.5mm, before it is pulled out.

**Results:**

The total solids of the concentrated mix with the addition of 50% ice from the Ziegra machine was measured to be 23.31%. The total solids of the mix with no added ice was measured to be 22.47%. Therefore both products were similar in total solids (and in agreement, within experimental error, with the value of 22.75% calculated from the solids contents of each of the ingredients).

The Instron Hardness test results were as follows:

Example 1 (Product with added ice)          $3.02 \pm 0.24$MPa
Comp. Example 1 (Product without added ice)   $7.37 \pm 0.92$MPa

The Hardness test results show that by manipulation of the ice phase, products can be made softer for the equivalent solids level. The data show the significant reduction in hardness between the sample solely processed through the ice cream freezer and that with ice particles added and the size reduced after the freezer. The sample containing the ice particulate inclusion can be squeezed from a sachet by hand at -18°C whereas the product without the added particles cannot be squeezed out without product warming or manipulation.

This example has the added consumer advantage that it is a frozen concentrate which can be added to water or milk or other diluent to create a drink containing ice. The softer frozen system containing the ice particulates can be stirred into the diluent and dispersed readily to create the drink whereas the control requires considerable physical disruption to allow its break up and subsequent dilution. Once diluted the larger particulate ice remains to give a cool, flavoured and refreshing drink that can be consumed directly or sucked up through a straw. Other examples include those containing fruit concentrates and purees, flavoured ice teas and frozen milk shakes.

### Example 2 - Soft Water-ices

This set of examples describes frozen water ice products according to the invention (Concentrates A to D) that are made with various proportions of Ziegra ice added into a concentrated mix frozen through a standard ice cream freezer (Crepaco W04), the combination then being subjected to ice particle size reduction as described above.

| Ingredient | Control | Concentrate A | Concentrate B | Concentrate C | Concentrate D |
|---|---|---|---|---|---|
| Sucrose (%) | 4.8 | 5.85 | 6.4 | 7.385 | 8.73 |
| Low Fructose Com Syrup (%) 78% solids | 13.8 | 16,83 | 18.4 | 21.23 | 25.09 |
| Dextrose Monohydrate (%) | 7.2 | 8.78 | 9.6 | 11.08 | 13.09 |
| Guar (%) | 0.25 | 0.305 | 0.33 | 0.385 | 0.45 |
| Citric acid (%) | 0.4 | 0.488 | 0.53 | 0.615 | 0.727 |
| Strawberry flavour (%) | 0.2 | 0.24 | 0.27 | 0.308 | 0.36 |
| Beetroot colour (%) | 0.09 | 0.11 | 0.12 | 0.138 | 0.16 |
| Total solids (%) | 23.1 | 28.1 | 30.7 | 35.5 | 41.9 |
| Water (%) | 73.25 | 67.397 | 64.35 | 58.859 | 51.393 |
| Added ice (%) | 0 | 17 | 25 | 35 | 45 |
| Total ice at -18°C (%) | 64 | 64 | 64 | 64 | 64 |
| Proportion of added ice | 0 | 28 | 39 | 55 | 70 |
| Gap size of crushing pump (mm) | N/a | 0.15, 1.5, 3.0 | 0.15, 1.5, 3.0 | 0.15, 1.5, 3.0 | 0.15, 1.5, 3.0 |
| Ratio of large to small particle sizes | N/a | 1.5, 15, 30 | 1.5, 15, 30 | 1.5, 15, 30 | 1.5, 15, 30 |

Hardness testing (see method) of these samples shows a three-fold difference between the control sample with no post-added ice and those with added ice at various levels. This shows the benefit of the addition of larger ice and its subsequent size control over just freezing through the ice cream freezer alone.

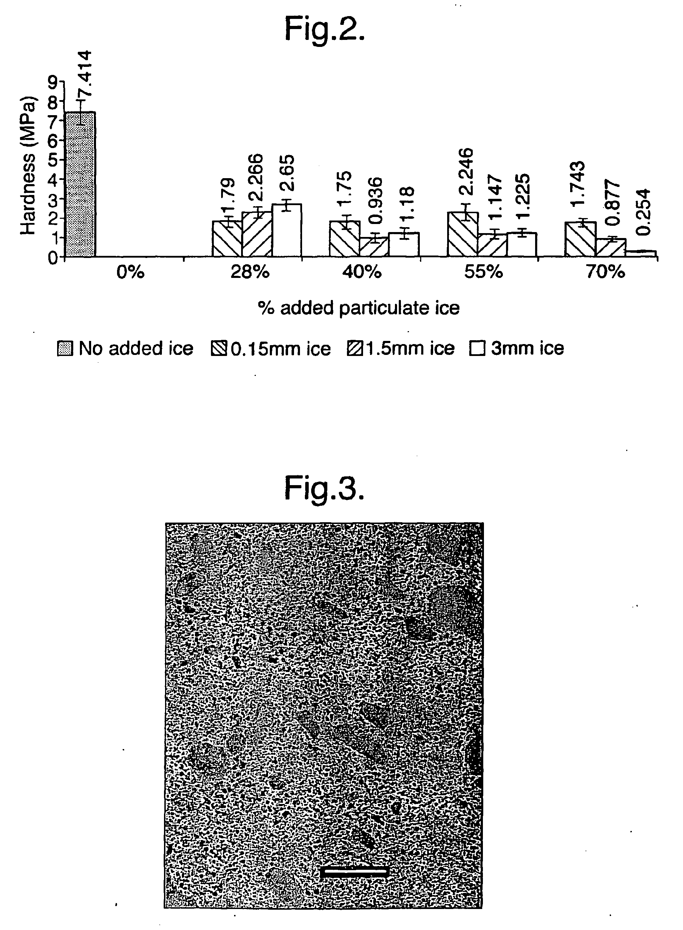

Comparison of the samples containing added ice shows that the hardness is reduced still further for particulate ice added: (1) at a proportion of the total ice of from 40 to 70%; and (2) with a particle size diameter of 1.5 to 3mm (see Figure 2).

In each of the above the hardness can be halved so further optimising the benefit of a softer frozen product to the consumer. This 'softness' can be shown across a range of product formats and the following examples illustrate this:

### Example 3 - Squeezable Ice Products

| Ingredient (%) | Concentrate | Final Product | Control Product |
|---|---|---|---|
| Water | 47.353 | 31.727 | 64.727 |

(continued)

| Ingredient (%) | Concentrate | Final Product | Control Product |
|---|---|---|---|
| Dextrose monohydrate | 21.538 | 14.43 | 14.43 |
| Sucrose | 12.308 | 8.246 | 8.246 |
| Low fructose glucose syrup (78% solids) | 12.308 | 8.246 | 8.246 |
| Cranberry Juice (39.5% solids) | 5.385 | 3.608 | 3.608 |
| Citric acid | 0.4 | 0.268 | 0.268 |
| Locust bean gum | 0.4 | 0.268 | 0.268 |
| Grapefruit flavour | 0.308 | 0.206 | 0.206 |
| Total solids | 44.7 | 30.0 | 30.0 |
| Added ice (%) | ----- | 33 | 0 |
| Total ice at -18°C (%) | ----- | 52 | 52 |
| Proportion of added ice % | ----- | 63% | 0% |
| Gap size of crushing pump (mm) | ----- | 1.0, 3.0 | ----- |
| Ratio of large to small particle sizes | ----- | 10, 30 | ----- |

Example 3 shows a product that is made by addition of 33% ice to a cooled concentrate mix and subsequent size reduction of the ice using a crushing pump with gap sizes from 1 to 3mm. The product is extruded at -6°C, then blast frozen (-35°C for 2 hours) and subsequently stored at -25°C. Before serving the product is tempered back to -18°C. It is found that the product at -18°C can be squeezed directly, by hand, from the pack (see photograph in Figure 3) which is of advantage to the consumer as it allows immediate consumption.

This can be compared with the control product which is frozen directly from the ice cream freezer and has no subsequently post-added ice. After equivalent hardening, storage and tempering it is found that the product at -18°C is very hard and cannot be squeezed directly from the pack without significant warming or kneading of the product surface through the pack.

### Example 4 - Spoonable Sorbets

This set of examples describes spoonable sorbet ice products according to the invention that are made with by adding Ziegra ice to a concentrated mix frozen through a standard ice cream freezer (Crepaco W04), the combination then being subjected to ice particle size reduction as described above.

The addition of added particulate ice can also be used to make sorbet formulations softer without using the addition of extra sugars.

| Ingredients (%) | Concentrate Mix | Fruit Ice |
|---|---|---|
| Water | 0.0 | 0.0 |
| Raspberry Puree 20Brix (31.3% solids) | 30.0 | 19.5 |
| Strawberry Puree (11% solids) | 30.0 | 19.5 |
| Low Fructose Corn Syrup (78% solids) | 11.0 | 7.15 |
| Dextrose monohydrate | 20 | 13 |
| Sucrose | 9.0 | 5.85 |
| Total solids | 48.5 | 31.5 |
| Added ice % | ----- | 35 |
| Overrun % | 5 | 5 |
| Total ice at -18°C | ----- | 51 |

(continued)

| Ingredients (%) | Concentrate Mix | Fruit Ice |
|---|---|---|
| Proportion of added ice % | ----- | 68 |
| Gap size of Crushing Pump (mm) | ----- | 1.0, 3.0 |
| Ratio of large to small particles | ----- | 10, 30 |

This sorbet, if made through a standard ice cream freezer without post-added particulate ice would have a very hard texture and would not be spoonable directly at -18°C. By use of the post addition of ice particulates the sorbet has a softer and more flowable texture that allows the product to be spoonable directly from the tub at -18°C. The softer sorbet texture will also help improve the fruit flavour delivery upon consumption therefore giving the consumer an improved sensory experience.

It is also possible to combine the addition of the fruit and the ice by the addition of frozen fruit directly into the frozen concentrate which can then also be size reduced by the crushing pump. This gives the advantage of maintaining fruit flavour through the reduced heat processing of the fruit ingredients i.e. addition of frozen fruit directly eliminates the need to thaw and hot mix.

**Example 5 - Frozen Sauces**

Formulations

Tomato Sauce (Pilot plant & lab scale)

| Ingredient | Concentrate | Product 50/50 | Product 25/75 |
|---|---|---|---|
| Tomato Paste (30Brix, 26% solids) | 87 | 43.5 | 65.25 |
| Olive Oil | 8 | 4 | 6 |
| Salt | 5 | 2.5 | 3.75 |
| Total solids | 36 | 18 | 27 |
| Added Ice % | 0 | 50 | 25 |
| Total ice at -18°C (%) | ----- | 71.9 | 57.9 |
| Proportion of added ice % | ----- | 69.5 | 43.2 |
| Gap size of crushing pump (mm) | ----- | 0.7 to 1.5 | 0.7 to 1.5 |

Sweet 'n' Sour (Lab Scale)

| Ingredient | Concentrate | Product 50/50 | Product 25/75 |
|---|---|---|---|
| Vinegar (1.7% solids) | 16.7 | 8.35 | 12.525 |
| Soy Sauce (19.8% solids) | 13.3 | 6.65 | 9.975 |
| Glucose Syrup 63DE (83% solids) | 36.7 | 18.35 | 27.525 |
| Sugar | 3.3 | 1.65 | 2.475 |
| Cornflour | 5 | 2.5 | 3.75 |
| Tomato Puree (18% solids) | 10 | 5 | 7.5 |
| Chicken stock (Concentrate 1:Water 3) 23% solids | 10 | 5 | 7.5 |
| Water | 5 | 2.5 | 3.75 |
| Total solids | 45.8 | 22.9 | 34.4 |
| Added Ice % | 0 | 50 | 25 |
| Total ice at -18°C (%) | ----- | 63.1 | 44.7 |

(continued)

| Ingredient | Concentrate | Product 50/50 | Product 25/75 |
|---|---|---|---|
| Proportion of added ice % | ----- | 79.2 | 55.9 |
| Gap size of crushing pump (mm) | ---- | 0.7 to 1.5 | 0.7 to 1.5 |

All ingredients were added together and mixed for Tomato Sauce. For the Sweet 'n' Sour the cornflour was pre-hydrated in hot chicken stock before addition to the rest of the mix. The concentrate(s) were then cooled to -6°C.

For lab scale tests, ice obtained from an ice machine was blast frozen then ground into finer particles using a commitrol. The ice was then sieved through sieves in the foster box at -4°C to produce ice particle sizes ranging from >0.7mm but less than < 1.5mm. For pilot plant tests, ice was obtained from a Ziegra machine as described in Example 1.

The sieved ice was added to the cooled concentrate in a weight ratio of 50:50 or 25:75 concentrate to sieved ice. For the control, water chilled to 0°C was added and the product frozen quiescently. Products were stored at -18°C.

Hardness Results

| | Control | | Example 5 | |
|---|---|---|---|---|
| | Average Hardness (MPa) | Std Dev | Average Hardness (MPa) | Std Dev |
| | | | | |
| Tomato (Pilot* Plant) | 4.3 | 0.57 | 0.99 | 0.11 |
| Tomato 50:50 | 4.8 | 0.44 | 0.55 | 0.07 |
| Tomato 25:75 | 19.34 | 5.9 | 1.3 | 0.38 |
| Sweet'N'Sour 50:50 | 4.4 | 0.69 | 0.12 | 0.04 |
| Sweet'N'Sour 25:75 | 21.12 | 4.7 | 0.61 | 0.12 |
| *Pilot plant sample was made using Ziegra process and estimated to have a slightly lower ratio of added ice approx. $45_{ice}$:$55_{concentrate}$. | | | | |

It is clear from these results that the process of the invention results in a significant reduction in product hardness in the order of from about 4-fold to 15-fold. All products have a Vickers hardness of less than 1.5.

The various features and embodiments of the present invention, referred to in individual sections above apply, as appropriate, to other sections, *mutatis mutandis.* Consequently features specified in one section may be combined with features specified in other sections, as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1. An unaerated ice-containing product comprising at -18°C, a first population of frozen particles having a particle size of greater than 1 mm and less than 5 mm and a second population of frozen particles having a mean particle size such that the ratio of the mean particle size for the first population to the mean particle size for the second population is greater than 10 and less than 100, wherein the-ratio of the weight of the first population of particles to the weight of the second population is from 2:3 to 4:1 and the first population and second population together provide at least 90% of the frozen particles present in the product.

2. A product according to claim 1 wherein the first population and second population of particles provide at least 95 wt% of the frozen particles present in the product.

3. A product according to claim 1 or claim 2 wherein the first population of frozen particles are ice particles.

4. A product according to any one of claims 1 to 3 wherein the second population of frozen particles are ice particles.

5. A product according to claim 1 or claim 2 wherein the first population of frozen particles are frozen food particles.

6. A product according to any one of the preceding claims wherein the ratio of the amount of the first population of particles to the amount of the second population is from 1:1 to 4:1.

7. A product according to any one of the preceding claims which has a Vickers Hardness of less than 4 MPa at -18°C.

8. A product according to any one of the preceding claims which is an ice confectionery product.

9. A product according to any one of claims 1 to 7 which is a frozen sauce.

10. A method of producing an unaerated ice-containing product according to any of claims 1 to 7 which method comprises in the following order:

   (i) cooling a product concentrate to a temperature of below -4°C;
   (ii) combining the cooled concentrate with frozen particles, at least 90% of which have a particle size of greater than 5 mm; and
   (iii) mechanically reducing the size of the frozen particles such that at least 90% of the resulting frozen particles have a size of greater than 1 mm and less than 5 mm.

11. A method according to claim 10 wherein the concentrate is a frozen confectionery premix concentrate.

12. A method according to claim 10 wherein the ice-containing product is a frozen sauce.

13. A method according to claim 10 wherein the concentrate is a milk shake concentrate.

14. A method according to any one of claims 10 to 13 which further comprises a step (iv) of lowering the temperature of the product obtained in step (iii) to a temperature of -18°C or lower.

15. A method according to any one of claims 10 to 14 which further comprises a step (v) of adding an aqueous liquid to the product obtained in step (iii) or step (iv).

**Patentansprüche**

1. Nicht mit Luft versetztes eishaltiges Produkt, umfassend bei -18 °C eine erste Population von gefrorenen Partikeln, die eine Partikelgröße von größer als 1 mm und kleiner als 5 mm haben, und eine zweite Population von gefrorenen Partikeln, die eine solche mittlere Partikelgröße haben, dass das Verhältnis der mittleren Partikelgröße für die erste Population zu der mittleren Partikelgröße für die zweite Population größer als 10 und kleiner als 100 ist, wobei das Verhältnis des Gewichts der ersten Population von Partikeln zu dem Gewicht der zweiten Population 2:3 bis 4:1 ist und die erste Population und die zweite Population zusammen wenigstens 90 % der gefrorenen Partikel, die in dem Produkt vorliegen, bereitstellen.

2. Produkt nach Anspruch 1, wobei die erste Population und die zweite Population von Partikeln wenigstens 95 Gew.-% der gefrorenen Partikel, die in dem Produkt vorliegen, bereitstellen.

3. Produkt nach Anspruch 1 oder Anspruch 2, wobei die erste Population von gefrorenen Partikeln Eispartikel sind.

4. Produkt nach einem der Ansprüche 1 bis 3, wobei die zweite Population von gefrorenen Partikeln Eispartikel sind.

5. Produkt nach Anspruch 1 oder Anspruch 2, wobei die erste Population von gefrorenen Partikeln gefrorene Nahrungsmittelpartikel sind.

**6.** Produkt nach einem der vorangehenden Ansprüche, wobei das Verhältnis der Menge der ersten Population von Partikeln zu der Menge der zweiten Population 1:1 bis 4:1 ist.

**7.** Produkt nach einem der vorangehenden Ansprüche, welches eine Vickers-Härte von weniger als 4 MPa bei -18 °C hat.

**8.** Produkt nach einem der vorangehenden Ansprüche, welches ein Eiskonfekt-Produkt ist.

**9.** Produkt nach einem der Ansprüche 1 bis 7, welches eine gefrorene Soße ist.

**10.** Verfahren zur Herstellung eines nicht mit Luft versetzten eishaltigen Produkts nach einem der Ansprüche 1 bis 7, wobei das Verfahren in der folgenden Reihenfolge umfasst:

(i) Kühlen eines Produktkonzentrats auf eine Temperatur von unter -4 °C;
(ii) Kombinieren des gekühlten Konzentrats mit gefrorenen Partikeln, von denen wenigstens 90 % eine Partikelgröße von größer als 5 $\mu$m haben, und
(iii) mechanisches Reduzieren der Größe der gefrorenen Partikel derart, dass wenigstens 90 % der resultierenden gefrorenen Partikel eine Größe von größer als 1 mm und weniger als 5 mm haben.

**11.** Verfahren nach Anspruch 10, wobei das Konzentrat ein gefrorenes Konfekt-Vormischungskonzentrat ist.

**12.** Verfahren nach Anspruch 10, wobei das eishaltige Produkt eine gefrorene Soße ist.

**13.** Verfahren nach Anspruch 10, wobei das Konzentrat ein Milchshake-Konzentrat ist.

**14.** Verfahren nach einem der Ansprüche 10 bis 13, das außerdem einen Schritt (iv) eines Senkens der Temperatur des Produkts, das in Schritt (iii) erhalten wurde, auf eine Temperatur von -18 °C oder niedriger umfasst.

**15.** Verfahren nach einem der Ansprüche 10 bis 14, das außerdem einen Schritt (v) eines Zugebens einer wässrigen Flüssigkeit zu dem in Schritt (iii) oder Schritt (iv) erhaltenen Produkt umfasst.


**Revendications**

**1.** Produit contenant de la glace non aérée comprenant, à -18° C, une première population de particules congelées ayant une taille de particules supérieure à 1 mm et inférieure à 5 mm et une deuxième population de particules congelées ayant une taille de particules moyenne telle que le rapport de la taille de particules moyenne pour la première population à la taille de particules moyennes pour la deuxième population est supérieur à 10 et inférieur à 100, le rapport en poids de la première population de particules au poids de la deuxième population étant de 2:3 à 4:1 et la première population et la deuxième population fournissant conjointement au moins 90 % des particules présentes dans le produit.

**2.** Produit selon la revendication 1, dans lequel la première population et la deuxième population de particules fournissent au moins 95 % en poids de particules congelées présentes dans le produit.

**3.** Produit selon la revendication 1 ou la revendication 2, dans lequel la première population de particules congelées est constituée de particules de glace.

**4.** Produit selon l'une quelconque des revendications 1 à 3, dans lequel la deuxième population de particules congelées est constituée de particules de glace.

**5.** Produit selon la revendication 1 ou la revendication 2, dans lequel la première population de particules congelées est constituée de particules alimentaires congelées.

**6.** Produit selon l'une quelconque des revendications précédentes, dans lequel le rapport de la quantité de la première population de particules à la quantité de la deuxième population est de 1:1 à 4:1.

**7.** Produit selon l'une quelconque des revendications précédentes, qui a une dureté Vickers inférieure à 4 MPa à -18° C.

**8.** Produit selon l'une quelconque des revendications précédentes, qui est un produit de confiserie glacée.

**9.** Produit selon l'une quelconque des revendications 1 à 7, qui est une sauce congelée.

**10.** Méthode de production d'un produit contenant de la glace non aérée selon l'une quelconque des revendications 1 à 7, ladite méthode comprenant, dans l'ordre suivant :

> (i) le refroidissement d'un concentré de produit à une température inférieure à -4° C ;
> (ii) la combinaison du concentré refroidi avec des particules congelées, dont au moins 90 % ont une taille de particules supérieure à 5 mm ; et
> (iii) la réduction mécanique de la taille des particules congelées de telle sorte qu'au moins 90 % des particules congelées obtenues aient une taille de particules supérieure à 1 mm et inférieure à 5 mm.

**11.** Méthode selon la revendication 10, dans laquelle le concentré est un concentré de prémélange de confiserie congelé.

**12.** Méthode selon la revendication 10, dans laquelle le produit contenant de la glace est une sauce congelée.

**13.** Méthode selon la revendication 10, dans laquelle le concentré est un concentré de lait fouetté.

**14.** Méthode selon l'une quelconque des revendications 10 à 13, qui comprend en outre une étape (iv) d'abaissement de la température du produit obtenu à l'étape (iii) à une température de -18° C ou inférieure.

**15.** Méthode selon l'une quelconque des revendications 10 à 14, qui comprend en outre une étape (v) consistant à ajouter un liquide aqueux au produit obtenu à l'étape (iii) ou l'étape (iv).

# Fig.1A.

# Fig.1B.

15

18

17

16

# Fig.1C.

25

20

26

27

# Fig.2.

% added particulate ice

▨ No added ice    ◨ 0.15mm ice    ▥ 1.5mm ice    ☐ 3mm ice

# Fig.3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1051913 A
- US 5738889 A
- US 4031262 A
- US 5698247 A
- WO 9841109 A
- US 4569209 A

**Non-patent literature cited in the description**

- Ice Cream. Van Nostrand Reinhold Company, 1986
- **DE CINDIO ; CORRERA.** *Journal of Food Engineering,* 1995, vol. 24, 405-415
- Handbook of Chemistry and Physics. CRC Press